# EUROPÄISCHE PATENTANMELDUNG

(11) **EP 2 481 512 A1**
(43) Veröffentlichungstag der Anmeldung: **01.08.2012**
(21) Anmeldenummer: 11152288.4
(22) Anmeldetag: 26.01.2011
(51) Int. Cl.: B23K 9/04, B22D 11/128, B23K 35/30, C22C 9/01, B23K 5/18, C23C 26/02, F16C 13/00, F16C 33/12

(54) **Verfahren zum Herstellen einer Rolle mit einer durch Auftragschweissen erzeugten Schicht ; Rolle zum Führen und/oder Stützen eines Strangs einer Stranggießanlage mit solcher Schicht**

(71) Anmelder: Voestalpine Stahl GmbH, 4020 Linz (AT)
(72) Erfinder: Miesbauer, Josef, 4191 Vorderweißenbach (AT)
(74) Vertreter: Jell, Friedrich

(57) **Zusammenfassung**

Es wird ein Verfahren zum Herstellen einer Rolle (1) und eine Rolle (1) zum Führen und/oder Stützen eines Strangs (5) einer Stranggießanlage mit einem einen Eisenwerkstoff aufweisenden Grundkörper (2) und mit einer eine Rollfläche (4) für den Strang (5) ausbildenden Schicht (3) aufweisend eine Kupferlegierung gezeigt, wobei die Schicht (3) mit dem Grundkörper (2) über eine Schweißverbindung stoffschlüssig verbunden ist. Um die Standfestigkeit der Rolle zu erhöhen, wird vorgeschlagen, dass die Schicht (3) über deren Auftragsschweißverbindung (6) mit dem Grundkörper (2) stoffschlüssig verbunden ist.

## Beschreibung

Die Erfindung betrifft eine Rolle zum Führen und/oder Stützen eines Strangs einer Stranggießanlage mit einem einen Eisenwerkstoff aufweisenden Grundkörper und mit einer eine Rollfläche für den Strang ausbildenden Schicht aufweisend eine Kupferlegierung, wobei die Schicht mit dem Grundkörper über eine Schweißverbindung stoffschlüssig verbunden ist.

Um eine innengekühlte Führungs- oder Stützrolle mit einem Grundkörper aus einem Eisenwerkstoff standfester gegenüber einem Strang einer Stranggießanlage zu machen, schlägt die DE4027224C1 vor, auf dem Grundköper eine Hülse aus einer Kupferlegierung aufzupressen, um damit eine Rollfläche für den Strang auszubilden. Zwar kann solch eine Kupferhülse zwischen dem Kühlmittel der innengekühlten Rolle und dem Strang eine verbesserte Wärmeleitfähigkeit bieten, nachteilig bei einem derartigen Konstruktionsaufbau ist deren geringe mechanische Belastbarkeit, sei es durch eine vergleichsweise geringe Festigkeit der Hülse selbst als auch durch den vergleichsweise losen Verbund zwischen Grundkörper und Hülse. Daran kann auch die Verbindungsschweißung zwischen Grundkörper und Hülse nichts ändern, zumal gerade hier in diesem Schweißbereich mit erheblichen Wärmespannungen und Verzugserscheinungen auch eine erhöhte Gefahr eines Materialversagens besteht. Eine vergleichsweise hohe Standfestigkeit kann damit nicht gewährleistet werden.

Außerdem ist aus der WO2009/130079A1 bekannt, eine Schutzschicht über einen Grundkörper einer Rolle mit Hilfe eines Auftragsschweißens eines Schweißwerkstoffs aus einer Eisenlegierung zu schaffen. Mit solch einer eine Rollfläche ausbildenden Schicht kann zwar eine hohe Härte und damit erhöhte Standfestigkeit der Rolle gegenüber mechanischen Belastungen durch den Strang der Stranggießanlage erreicht werden, nachteilig wurde jedoch festgestellt, dass diese Panzerschicht im Nahbereich der Kokille der Stranggießanlage einen erhöhten Verschleiß unterliegt. Untersuchungen zeigten Beschädigungen an der Rollfläche durch Risse und Abplatzungen der Panzerschicht, was in Kombination mit dem dadurch entstehenden unrunden Rollenlauf zusätzlich zu einer Beschleunigung der Verschleißwerte führte. Derartige Rollen sind daher im kokillennahen Bereich der Strangführung beispielsweise als Fuß- bzw. auch im Anfangsbereich der Biegezone nicht geeignet. Insbesondere diese, der Kokille nahe Rollen müssen besonders standfest sein, weil damit der Gießspalt festgelegt wird und verschlissene Rollen zu erheblichen Walzbelastungen auf die anschließenden Rollen führen können.

Die Erfindung hat sich daher die Aufgabe gestellt, eine Rolle zum Führen und/oder Stützen eines Strangs einer Stranggießanlage der eingangs geschilderten Art auf konstruktiv einfache Weise derart zu verbessern, dass selbst im Nahbereich der Kokille der Stranggießanlage eine hohe Standfestigkeit gewährleistet werden kann.

Die Erfindung löst die gestellte Aufgabe dadurch, dass die Schicht über deren Auftragsschweißverbindung mit dem Grundkörper stoffschlüssig verbunden ist.

Ist die Schicht über deren Auftragsschweißverbindung mit dem Grundkörper stoffschlüssig verbunden, dann kann trotz der vergleichsweise geringen Materialfestigkeit der Kupferlegierung eine ausreichend feste Schutzschicht geschaffen werden. Es hat sich nämlich herausgestellt, dass mit Hilfe der Auftragsschweißverbindung eine mit dem Grundköper vollflächige und sohin besonders feste Verbindung zwischen Schicht und Grundkörper geschaffen werden kann. Diese Art der Schweißverbindung kann zusätzlich auch durch eine Aufmischung -wenngleich gering- für einen verbesserten Temperaturübergang zwischen Schicht und Grundkörper sorgen. Eine gleichmäßigere Temperaturverteilung über die Schicht kann daher erreicht werden. Gegenüber dem Stand der Technik kann daher auch an der Rollfläche das Auftreten von lokalen Überhitzungen, sogenannten Hotspots, vermindert werden, sodass diese Rollen selbst im Nahbereich der Kokille der Stranggießanlage vergleichsweise hohe mechanische Belastungen beschädigungsfrei aufnehmen können. Aufgrund der stoffschlüssigen Auftragsverbindung der Kupferlegierung konnten nämlich Risse und damit Abplatzungen an der den Grundkörper gegenüber der Rollfläche abdeckenden Schicht einerseits und ein Spannungsverzug zwischen Schicht und Grundkörper andererseits ausgeschlossen werden, was für eine hohe Standfestigkeit der Rollen sorgen kann. Vorzugsweise besteht die Schicht aus einer Kupferlegierung. Eine derartig aufgeschweißte Schicht kann daher im Nahbereich der Kokille der Stranggießanlage trotz seiner gegenüber bekannten anderen Panzerschichten geringeren Materialfestigkeitswerten auf der einen Seite als auch gegenüber aufgesteckten Kupferhülsen mit Flüssigkeitskühlung auf der anderen Seite auszeichnen.

Die Standfestigkeit der Rolle kann deutlich verbessert werden, wenn die Kupferlegierung aus einer Aluminiumbronze besteht. Aluminiumbronze kann sich nämlich gegenüber anderen Kupferlegierungen durch seine Beständigkeit gegenüber Verschleiß, Korrosion (z.B. durch Gießpulver) sowie mechanischen Belastungen auszeichnen. Im Gegensatz zum Stand der Technik kann damit eine besonders widerstandsfähige und eine verminderte Hotspotneigung aufweisende Schutzschicht sichergestellt werden. Eine derart beschichtete Rolle kann selbst im Nahbereich der Kokille standfest einsetzbar sein. Durch den vergleichsweise hohen Al-Anteil der Aluminiumbronze bildet sich nämlich ein fest haftender und gut schützender Oxidfilm (Cu₂O sowie Al₂O₃ enthaltend) aus, der gerade im Nahbereich der Kokille für eine besondere Korrosionsbeständigkeit der Rolle sorgen kann. Dort treten nämlich im Gegensatz zu weiter abgelegenen Rollenbereichen der Biegezone vergleichsweise hohe chemische Belastungen durch aggressive Gießschlacke in Verbindung mit Spritzwasser auf. Besonders korrosionsbeständig haben sich hierbei homogene α-Legierungen herausgestellt, die sich meist mit Al (Aluminium) ≤ 7,8 Massen% ausbilden. Für Rollen bei einer Stranggießanlage hat sich bevorzugt heterogene Aluminiumbronze als Schicht herausgestellt, weil diese heterogene CuAl Legierung gegenüber der homogenen α-Legierung eine erhöhte mechanische Widerstandsfestigkeit zum Führen und/oder Stützen des Strangs der Stranggießanlage bieten kann. Die heterogene Aluminiumbronze kann zweiphasig oder mehrphasig sein. Diese Aluminiumbronze-Gefüge sind zwar meist etwas schlechter wärmeleitfähig bzw. auch korrosionsanfälliger gegenüber einer homogenen CuAl Legierung - für den Anwendungsbereich der Stranggießanlage zeichneten sich diese jedoch durch eine gute Spannungsrisskorrosion (SpRK-Resistenz) aus, weil hier stets mit Zugspannungen auf die Schicht bzw. die Rolle zu rechnen ist. Derartige Gefüge bilden sich meist mit Al > 7,8 Massen% aus, wobei insbesondere deren martensitische Phase (β') festigkeitssteigernd wirkt. Besonders ausgezeichnet hat sich eine heterogene Mehrphasenlegierung mit Al > 10 Massen%. Diese Mehrphasenlegierung kann neben der α-Phase und γ₂-Phase auch aufgrund der Wärmebehandlung durch das Auftragsschweißen zu martensitischen Phasen (β', β'₁ und/oder γ'₁) führen, was eine besonders chemisch und mechanisch widerstandsfähige Schicht ermöglichen kann. Eine austenitische Phase (γ₂) soll unter Umständen vermieden werden, um nicht die Wärmeleitfähigkeit zu verringern bzw. eine erhöhte Bruchgefahr in Kauf nehmen zu müssen. Vorzugsweise wird das Auftragsschweißen derart vorgenommen, dass ein vergleichsweise hoher Grad an martensitischen Phasen im Gefüge auftritt.

Weist die Aluminiumbronze zu Cu (Kupfer) und Al wenigstens ein weiteres Legierungselement auf, insbesondere Ni (Nickel), Fe (Eisen) und/oder Mn (Mangan), dann kann damit die Standfestigkeit der Rolle weiter verbessert werden. Durch die weiteren Legierungszusätze Ni, Fe bzw. Mn können nämlich zusätzliche Verbesserungen in der Widerstandsfähigkeit erreicht werden. Damit kann beispielsweise die Korrosionsbeständigkeit verbessert werden, was vorzugsweise bei mehrphasiger Aluminiumbronze von Vorteil ist. Ni kann auch zur Verbesserungen der Dauerschwingfestigkeit genützt werden, um mechanische Belastungsausschläge aufgrund unregelmäßiger Strangoberflächen abzufangen. Der Legierungsbestandteil Mn kann außerdem zur Erhöhung der Warmfestigkeit herangezogen werden, um den höheren Temperaturen im Nahbereich der Kokille standhalten zu können, wobei über den Legierungsanteil Fe auch die Kornfeinung des Gefüges und die Festigkeit der Schicht verbessert werden kann. Im Allgemeinen konnte festgestellt werden, dass mit den Legierungselementen Fe und Ni die Korrosionsbeständigkeit und mit den Legierungselementen Mn, Ni und Fe die Festigkeit der Schicht noch weiter verbessert werden kann.

Weist die Schicht wenigstens teilweise eine Ausnehmung auf seiner Rollfläche auf, dann kann die Temperaturverteilung an der Rollfläche vergleichmässigt werden. Die Ausnehmungen können nämlich in Form von Strömungskanälen zum Ableiten von Kühlflüssigkeit bzw. zur Ausgasung eventueller Gasbildungen für eine verbesserte Wärmeableitung im Kontaktbereich mit dem Strang genützt werden. Außerdem können diese Ausnehmungen in der Art von Kühlrippen eine erhöhte Wärmeabgabe durch vergrößerte Oberfläche gewährleisten. Des Weiteren können diese Ausnehmungen die Möglichkeit eröffnen, unterschiedliche Wärmeausdehnungen von Schicht und Grundkörper abzufangen, sodass die Rollen eine hohe Laufruhe und Standfestigkeit aufweisen können. Konstruktiv einfach kann die Ausnehmung als wenigstens eine die Rollfläche umlaufende Rille ausgebildet sein. Außerdem kann so eine Art Kühlnut geschaffen werden.

Der Zusammenhalt von Schicht und Grundkörper kann erheblich verbessert werden, wenn der Grundkörper geneigt zur Laufrichtung zick-zack verlaufenden Einbrand, der auch als u-förmige Nut bezeichnet werden kann, aufweist, an den die Schicht anschließt. Über derart verlaufende Nuten kann nämlich eine zur Rollbelastung normale Komponente in der Abstützung erzeugt werden, was zu erhöhter mechanischer Belastbarkeit führen kann.

Es ist weiter die Aufgabe der Erfindung, ein Verfahren zur Herstellung oder Instandsetzung einer Rolle zu schaffen, mit dem kostengünstig und schnell eine gegenüber chemischen und mechanischen Belastungen beständige Schutzbeschichtung auf einen Grundkörper der Rolle aufgebracht werden kann.

Die Erfindung löst die gestellte Aufgabe hinsichtlich des Verfahrens dadurch, dass wenigstens ein aus einer Kupferlegierung bestehender Schweißwerkstoff auf den Grundkörper auftragsgeschweißt wird.

Wird wenigstens ein aus einer Kupferlegierung bestehender Schweißwerkstoff auf den Grundkörper auftragsgeschweißt, dann kann mit einer einlagigen Auftragsschweißung eine gleichmäßige Schweißschicht auf dem Grundkörper aufgetragen werden, die sich insbesondere in seiner vergleichsweise hohen chemischen und mechanischen Belastungsfähigkeit gegenüber anderen bekannten Auftragsschichten auszeichnet. Die Rolle kann daher durch das erfindungsgemäße Verfahren nicht nur besonders standfest sondern auch vergleichsweise schnell und kostengünstig hergestellt werden, weil ein Verfahrensschritt ausreicht, den Grundkörper ausreichend zu beschichten.

Wird als Schweißwerkstoff Aluminiumbronze aufgeschweißt, dann kann trotz einfacher Verfahrensbedingungen eine verbesserte stoffschlüssige Verbindung zwischen dem Grundkörper und der Schicht ermöglicht werden. Aluminumbronze kann nämlich eine verbesserte Schweißfähigkeit mit einem Grundköper mit einem Eisenwerkstoff aufweisen. Besonders hat sich heterogene Aluminiumbronze als Schweißwerkstoff ausgezeichnet, um damit selbst unter Parametern einer Aufmischung mit dem Grundmaterial des Grundkörpers ein zwei- oder mehrphasiges Schichtgefüge sicherstellen zu können. Vorteilhaft kann damit beim Auftragsschweißen sichergestellt werden, dass sich eine martensitische bzw. martensitähnliche Phase in der Schicht ausbildet, die für eine erhebliche Festigkeitssteigerung sorgen kann. Das Verfahren ist daher nicht nur einfach reproduzierbar, sondern damit auch vergleichsweise einfach handhabbar werden.

Erleichterte Verfahrensbedingungen können sich ergeben, wenn die Aluminiumbronze einen Legierungsanteil an Al größer 10 Massen% aufweist. Damit können beispielsweise auch bei höheren Graden der Aufmischung zwischen Grundmaterial und Schweißwerkstoff immer noch ein heterogenes Schichtgefüge und eine standfeste Rollen geschaffen werden. Vorzugsweise ist die Aluminiumbronze mehrstofflegiert, insbesondere aufweisend zusätzlich wenigstens ein Legierungselement Ni, Fe und/oder Mn. Damit kann unter anderem die Schweißfähigkeit weiter verbessert werden. Insbesondere kann sich dabei Mn auszeichnen, um damit die Aufmischung von Schweißwerkstoff und Werkstoff des Grundköpers mit dem Eisenwerkstoff zu beruhigen. Dies ist insbesondere von Vorteil, wenn der Grundkörper aus einem Stahlwerkstoff besteht.

Für ein Auftragsschweißen hat sich als besonders vorteilhaft herausgestellte, wenn der Schweißwerkstoff aus Al 7,8 bis 16 Massen%, Ni max. 8 Massen%, Fe max. 5 Massen%, Mn max. 2 Massen%, herstellungsbedingten Verunreinigungen sowie aus einem Rest an Massen% Cu besteht. Neben einem schnellen Schweißvorgang können damit auch Fehler in der Aufschweißung vermindert werden. Weitere Vereinfachungen beim Auftragsschweißen hinsichtlich eines zu hohen Grads an Aufmischung zeigten sich, wenn die Schicht wenigstens im Bereich deren Rollfläche aus Al 10 bis 14 Massen%, Ni 3 bis 7 Massen%, Fe max. 2 Massen%, Mn max. 2 Massen%, herstellungsbedingten Verunreinigungen sowie aus einem Rest an Massen% Cu besteht.

Es muss nicht weiter erwähnt werden, dass die Legierungen in der Zusammensetzung eine Streubreite aufweisen können. Solch eine Streubreite der einzelnen Legierungsanteile kann sich beispielsweise in ein 1/20 vom Ausgangswert bewegen.

Besondere Standfestigkeit kann mit einer Schicht aus Al 11,5 Massen%, Ni 4,8 Massen%, Fe 2 Massen%, Mn 1 Massen%, herstellungsbedingten Verunreinigungen sowie aus einem Rest an Massen% Cu. Insbesondere der vergleichsweise hohe Legierungsanteil an Al und Ni zeigte eine bevorzugte mechanische Eigenschaft hinsichtlich Korrosions- und Verschleißfestigkeit. Die Bildung von Hotspots an der Rolloberfläche konnte ebenso verhindert werden, was eine besonders standfeste Rolle ermöglichen kann.

Einfache Verfahrensbedingungen können sich ergeben, wenn die Schweißraupe beim Auftragsschweißen wenigstens teilweise einem zick-zack Verlauf folgend aufgetragen wird. Außerdem kann durch diese Art der Auftragung eine besonders gleichmäßige Auftragsschweißung sichergestellt werden.

Um eine durchgehende sowie auch eine gleichmäßige Schicht zu gewährleisten, kann vorgesehen sein, dass beim Auftragsschweißen die Schweißraupe mit der bereits aufgeschweißten Schweißraupe überlappend, insbesondere mindestens 3 mm überlappend, aufgeschweißt wird.

Außerdem kann sich die Erfindung dadurch auszeichnen, indem Aluminiumbronze als Schweißwerkstoff zum Auftragsschweißen einer Schicht auf eine Rolle zum Führen und/oder Abstützen eines Strangs einer Stranggießanlage verwendet wird. Durch diese besondere Kupferlegierung kann nämlich nicht nur eine hohe Standfestigkeit der Rolle gegenüber chemischen und mechanischen Belastungen ermöglicht, sondern die Rolle kann auch schnell und kostengünstig hergestellt bzw. instandgesetzt werden. Insbesondere hat sich für die Zecke des Führens und/oder Abstützens eines Strangs einer Stranggießanlage eine heterogene Aluminiumbronze als vorteilhaft ausgezeichnet.

Die Verwendung kann verbessert werden, wenn der Schweißwerkstoff aus Al 7,8 bis 16 Massen%, Ni max. 8 Massen%, Fe max. 5 Massen%, Mn max. 2 Massen%, herstellungsbedingten Verunreinigungen sowie aus einem Rest an Massen% Cu besteht. Weitere Verbesserungen konnten ermöglicht werden, wenn die Schicht wenigstens im Bereich deren Rollfläche aus Al 10 bis 14 Massen%, Ni 3 bis 7 Massen%, Fe max. 2 Massen%, Mn max. 2 Massen%, herstellungsbedingten Verunreinigungen sowie aus einem Rest an Massen% Cu besteht.

Insbesondere hat sich dabei die Verwendung einer Aluminiumbronze, bestehend aus Al 11,5 Massen%, Ni 4,8 Massen%, Fe 2 Massen%, Mn 1 Massen%, herstellungsbedingten Verunreinigungen sowie einem Rest an Massen% Cu ausgezeichnet, weil damit einfache Verfahrensbedingungen beim Auftragsschweißen und sicher auch martensitische Schichtstrukturen geschaffen werden können.

In den Figuren ist beispielsweise der Erfindungsgegenstand anhand eines Ausführungsbeispiels näher dargestellt. Es zeigen
- Fig. 1.: eine abgerissene Schnittansicht auf eine Rolle,
- Fig. 2: eine abgerissene Längsansicht der Rolle nach Fig. 1,

- Fig. 3: eine abgerissene Längsansicht der teilweise dargestellten Rolle beim Auftragsschweißen auf deren Grundkörper und
- Fig. 4: eine abgerissene Schnittansicht der Rolle vor einem Rückdrehen der Auftragsschweißung der Rolle nach Fig. 3.

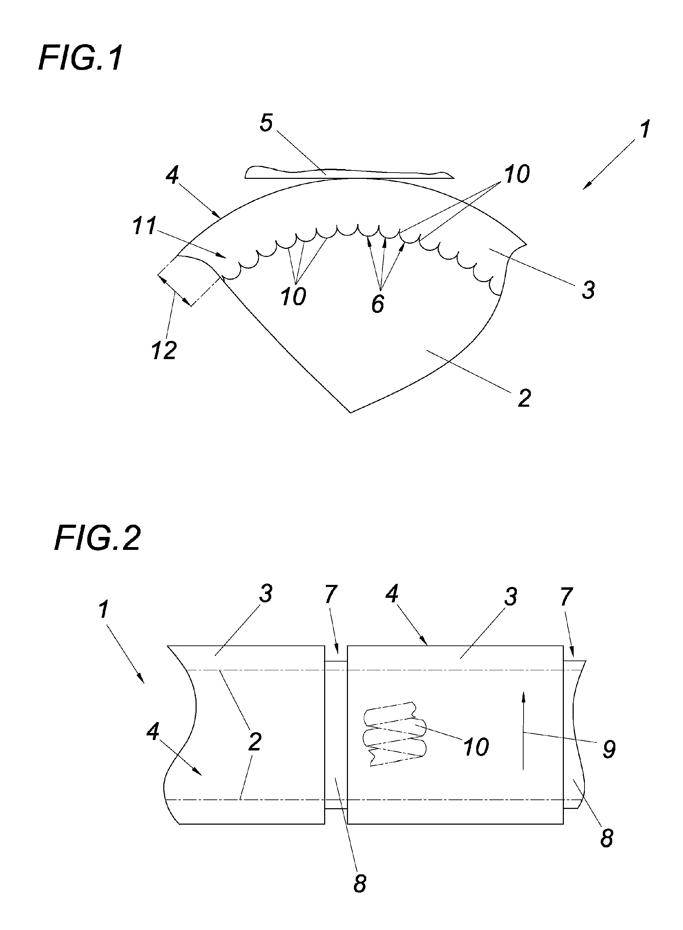

Gemäß Fig. 1 ist beispielsweise ein Ausführungsbeispiel zu einer Rolle 1 dargestellt, die aus einem Grundkörper 2 und einer darauf aufgebrachten Schicht 3 besteht. Die Rolle formt eine Rollfläche 4 zum Führen und/oder Stützen eines Strangs 5 einer Stranggießanlage aus, welche Stranggießanlage nicht näher dargestellt worden ist. Außerdem weist der Grundkörper 2 einen Eisenwerkstoff und die Schicht 3 eine Kupferlegierung auf. Um nun eine besonders standfeste Verbindung zwischen der Schicht 3 und dem Grundkörper 2 sicherstellen zu können, wird vorgeschlagen, dass der Grundkörper 2 von einer Schicht 3 abgedeckt wird, die über eine Auftragsschweißverbindung 6 mit dem Grundkörper 2 stoffschlüssig verbunden ist. Es ist daher durch die Auftragsschweißverbindung 6 sichergestellt, dass die Schicht 3 mit dem Grundkörper 2 vollflächig verbunden ist, um so neben der Verbindungsfestigkeit zusätzlich einen hohen Wärmeleiteintrag in den Grundkörper 2 zu gewährleisten. Außerdem kann mit der Auftragsschweißverbindung 6 auf einfache Weise eine vollständige Abdeckung des Grundkörpers 2 gegenüber der Rollfläche 4 mit einer Schicht 3 sichergestellt werden, sodass eine standfeste und kostengünstige Rolle geschaffen werden kann. Insbesondere konnte sich dabei eine Aluminiumbronze als Kupferlegierung auszeichnen, um höheren Festigkeitswerten entsprechen zu können.

Um die Gefahr des Auftretens an Hotspots an der Rollfläche der Schicht 3 zu verringern, weist die die Rollfläche 4 Ausnehmungen 7 auf, die als die Rollfläche 4 umlaufende Rillen 8 ausgeführt sind, wie diese in der Fig. 2 entnommen werden können. Diese Rillen ragen nicht bis zum Grundkörper 2 vor, um damit die schützende Schicht 3 im Bereich der Rollfläche 4 nicht zu unterbrechen.

Gemäß der Fig. 2 ist ebenso zu erkennen, dass der Grundkörper 2 geneigt zu seiner Laufrichtung 9 zick-zack verlaufenden Einbrand bzw. u-förmige Nut 10 aufweist. Die von der Schicht 3 überdeckten Nuten 10 können für erhöhte Verbindungskräfte sorgen. Der Grundkörper schließt also über die Nuten 10 an die Schicht 3 an.

Zwischen dem Grundkörper 2 und der Schicht 3 besteht eine geringe Materialaufmischung 11. In die Schichtdicke 12 der Schicht 3 kann daher ein erhöhter Anteil an Eisenwerkstoff vermieden werden, um so eine erhöhte Korrosionsanfälligkeit der Schicht zu vermieden. Außerdem kann durch eine geringe Materialaufmischung 11 ein gleichmäßiges Schichtgefüge für eine hohe Standfestigkeit der Rolle 1 sichergestellt werden.

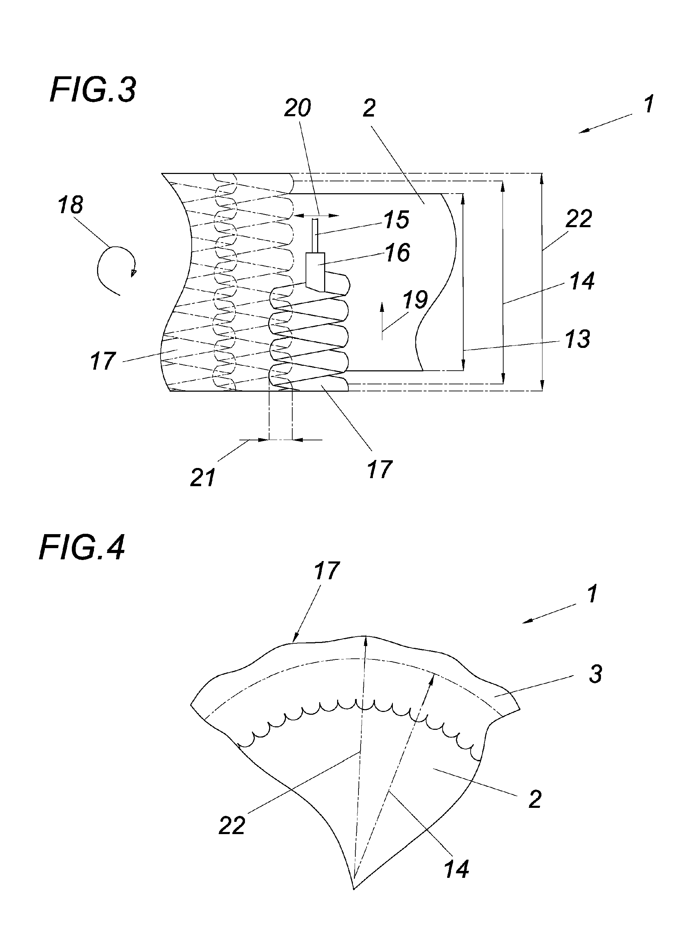

Anhand der Figuren 3 und 4 wird nun das erfindungsgemäße Verfahren zur Herstellung oder Instandsetzung einer Rolle 1 beispielsweise dargestellt. Zunächst wird ein Grundkörper 2 auf ein Untermaß 13 gegenüber dem zu erreichenden Sollmaß 14 der Rolle 1 abgedreht. Es versteht sich von selbst, dass hier vom Durchmesser gesprochen wird. Dieser Verfahrensschritt ist meist bei einer Instandsetzung einer Rolle 1 durchzuführen, um die verschlissenen Schichten von der Rolle 1 vollständig abtragen zu können. Bei einer neu zu schaffenden Rolle 1 kann bereits ein auf Untermaß 13 gefertigter Grundkörper 2 verwendet werden, wobei jedoch ein Abdrehen auf Untermaß 13 vorstellbar ist. Bevorzugt wird ein Untermaß 13 von 3mm zum Sollmaß 14. Der Grundkörper 2 weist einen Eisenwerkstoff (Fe) auf, wobei dieser Grundkörper 2 vorzugsweise aus einem Stahlwerkstoff besteht. Baustahl S355, CrMo-legierter Vergütungsstahl 25CrMo4 und 42CrMo4 werden beispielsweise genannt. Auf diesem Grundkörper 2 wird nun eine schützende Schicht 3 durch ein Auftragsschweißen vorgesehen, und zwar wird für hervorragende chemische und mechanische Beständigkeit ein aus einer Kupferlegierung bestehender Schweißwerkstoff 15 als Fülldraht mit 1,6mm Durchmesser mit einem Brenner 16 auf den Grundkörper 2 auftragsgeschweißt. Vorzugsweise wird dieses Auftragsschweißen unter Gasschutz durchgeführt, was nicht näher dargestellte worden ist. Durch dieses Auftragsschweißen und ein anschließende Abkühlen kann ein besonders Gefüge geschaffen werden, insbesondere wenn heterogene Aluminiumbronze verwendet wird und damit die Festigkeit der Schicht deutlich zu erhöhen.

Gemäß Fig. 3 ist ersichtlich, dass die Schweißraupe 17 beim Auftragsschweißen wenigstens teilweise einem zick-zack Verlauf folgend aufgetragen wird. Zu diesem Zweck wird die Rolle 1 in Rotation 18 versetzt, um damit einen Vorschub in Schweißrichtung 19 für den eine Pendelbewegung 20 ausführenden Brenner 16 zu schaffen. Damit kann mit einem Verfahrensschritt eine einlagige Schweißraupe 17 auf dem Grundkörper 2 aufgetragen werden, was erfindungsgemäße ausreichend ist, eine standfeste Rolle 1 zu schaffen.

Beim Aufschweißen wird eine Überlappung 21 der Schweißraupen 17 verfahrensmäßig durchgeführt, um damit eine geschlossene Schicht 3 über dem Grundkörper 2 sicherstellen zu können. Bevorzugt wird eine Überlappung 21 von mindestens 3 mm. Die Parameter beim vorzugsweise stechenden Aufschweißen werden weiter derart eingestellt, dass eine geringe Aufmischung 11 des Materials des Grundkörpers 2 der Rolle 1 eintritt. Damit kann beispielsweise ein besonders vorbestimmbares Gefüge der Schicht ermöglicht werden, was sich durch martensitische Phasen und damit besonderer Härte auszeichnen kann. Um auch bei höheren Graden der Aufmischung martensitische Phasen (β', ß'₁ und/oder γ'₁) im Eutektoid gewährleisten zu können, hat sich die Verwendung von heterogene Aluminiumbronze mit einem Legierungsanteil an Al größer 10 Massen% ausgezeichnet. Ein derart eingestelltes Auftragsschweißen kann daher reproduzierbar für eine hohe Standfestigkeit der Rolle mit vergleichsweise lange gleich bleibenden Rollparametern sorgen.

Mit Hilfe des Auftragsschweißens wird auf den Grundkörper 2 eine das Sollmaß 14 überschreitende Schicht 3 aufgetragen. Vorzugsweise wird auf das Untermaß eine 6 bis 7mm dicke Schicht 3 aufgetragen. Das so entstehende Übermaß 22 wird dann durch Abdrehen auf das Sollmaß 14 gebracht, um eine glatte Rollfläche 4 für den Strang 5 ausbilden zu können. Anschließend werden Ausnehmungen 7 in der Rollfläche 4 eingebracht, um damit Rillen 8 zur Erhöhung der Standfestigkeit der Rolle 1 schaffen zu können.

Als bevorzugter Schweißwerkstoffs 15 hat sich Aluminiumbronze mit eine Legierungszusammensetzung von Al 11,5 Massen%, Ni 4,8 Massen%, Fe 2 Massen%, Mn 1 Massen%, herstellungsbedingten Verunreinigungen sowie aus einem Rest an Massen% Cu herausgestellt. Mit dieser Legierung konnte der Verschleiß am Durchmesser der Schicht 3 um über 80 gegenüber Rollen mit bekannten Panzerschichten verringert werden. Außerdem konnte mit der erfindungsgemäßen Schicht 3 eine Härte nach Rockwell von 180 bis 240 nach Skale C (180 bis 240 HRC) geschaffen werden, was insbesondere durch die legierungsbedingte martensitische bzw. martensitähnliche Phase im Gefüge der Schicht 3 zurückgeführt werden kann. Weiters hat sich als positiv der vergleichswese hohe Ni Anteil herausgestellt. Damit konnte eine verbesserte Wechselbelastungsfähigkeit des Gefüges ermöglicht werden, was die Standfestigkeit der Rolle beim Führen und/oder Stützen eines Strangs einer Stranggießanlage erhöhen konnte. Hinzu kommt, dass mit dem vergleichsweise hohen Al Anteil auch Probleme beim Auftragsschweißen durch eine Aufmischung gering gehalten werden konnte, so dass stets eine austenitische Phase garantiert und damit eine vergleichsweise hohe Festigkeit der Schicht erreicht werden konnte.

## Patentansprüche

1. Rolle zum Führen und/oder Stützen eines Strangs (5) einer Stranggießanlage mit einem einen Eisenwerkstoff aufweisenden Grundkörper (2) und mit einer eine Rollfläche (4) für den Strang (5) ausbildenden Schicht (3) aufweisend eine Kupferlegierung, wobei die Schicht (3) mit dem Grundkörper (2) über eine Schweißverbindung stoffschlüssig verbunden ist, **dadurch gekennzeichnet, dass** die Schicht (3) über deren Auftragsschweißverbindung (6) mit dem Grundkörper (2) stoffschlüssig verbunden ist.

2. Rolle nach Anspruch 1, **dadurch gekennzeichnet, dass** die Kupferlegierung aus einer vorzugsweise heterogenen Aluminiumbronze besteht.

3. Rolle nach Anspruch 2, **dadurch gekennzeichnet, dass** die Aluminiumbronze zu Cu und Al wenigstens ein weiteres Legierungselement, insbesondere Ni, Fe und/oder Mn, aufweist.

4. Rolle nach einem der Ansprüche 1, 2 oder 3, **dadurch gekennzeichnet, dass** die Schicht (3) wenigstens teilweise eine Ausnehmung (7) auf seiner Rollfläche (4), insbesondere wenigstens eine die Rollfläche (4) umlaufende Rille (8), aufweist.

5. Rolle nach einem der Ansprüche 1 bis 4, **dadurch gekennzeichnet, dass** der Grundkörper (2) geneigt zu seiner Laufrichtung (9) zick-zack verlaufenden Einbrand (10) aufweist, an den die Schicht (3) anschließt.

6. Verfahren zur Herstellung oder Instandsetzung einer Rolle (1) nach einem der Ansprüche 1 bis 5, bei dem auf einem einen Eisenwerkstoff, insbesondere Stahlwerkstoff, aufweisenden Grundkörper (2) eine Schicht (3) durch ein Auftragsschweißen mit einem Schweißwerkstoff (15) aufgebracht wird, **dadurch gekennzeichnet, dass** wenigstens ein aus einer Kupferlegierung bestehender Schweißwerkstoff (15) auf den Grundkörper (2) auftragsgeschweißt wird.

7. Verfahren nach Anspruch 6, **dadurch gekennzeichnet, dass** ein aus einer vorzugsweise heterogenen Aluminiumbronze bestehender Schweißwerkstoff (15) aufgeschweißt wird.

8. Verfahren nach Anspruch 7, **dadurch gekennzeichnet, dass** die vorzugsweise mehrstofflegierte Aluminiumbronze, insbesondere aufweisend zusätzlich wenigstens ein Legierungselement Ni, Fe und/oder Mn, einen Legierungsanteil an Al größer 10 Massen% aufweist.

9. Verfahren nach Anspruch 6, 7 oder 8, **dadurch gekennzeichnet, dass** der Schweißwerkstoff (15) aus
| | |
|---|---|
| Al | 7,8 bis 16 Massen%, vorzugsweise 10 bis 14 Massen%, |
| Ni | bis 8 Massen%, vorzugsweise 3 bis 7 Massen%, |
| Fe | max. 5 Massen%, vorzugsweise max. 2 Massen%, |
| Mn | max. 2 Massen%, |
herstellungsbedingten Verunreinigungen sowie aus einem Rest an Massen% Cu besteht.

10. Verfahren nach Anspruch 9, **dadurch gekennzeichnet, dass** der Schweißwerkstoff (15) aus
| | |
|---|---|
| Al | 11,5 Massen%, |
| Ni | 4,8 Massen%, |
| Fe | 2 Massen%, |
| Mn | 1 Massen%, |
herstellungsbedingten Verunreinigungen sowie aus einem Rest an Massen% Cu besteht.

11. Verfahren nach einem der Ansprüche 6 bis 10, **dadurch gekennzeichnet, dass** die Schweißraupe (17) beim Auftragsschweißen wenigstens teilweise einem zick-zack Verlauf folgend aufgetragen wird.

12. Verfahren nach Anspruch 11, **dadurch gekennzeichnet, dass** beim Auftragsschweißen die Schweißraupe (17) mit der bereits aufgeschweißten Schweißraupe (17) überlappend, insbesondere mindestens 3 mm überlappend, aufgeschweißt wird.

13. Verwendung von vorzugsweise heterogener Aluminiumbronze als Schweißwerkstoff (15) zum Auftragsschweißen einer Schicht (3) auf eine Rolle (1) zur Schaffung einer Rollfläche (4) zum Führen und/oder Abstützen eines Strangs (5) einer Stranggießanlage.

14. Verwendung nach Anspruch 13, **dadurch gekennzeichnet, dass** die Aluminiumbronze aus
| | |
|---|---|
| Al | 7,8 bis 16 Massen%, vorzugsweise 10 bis 14 Massen%, |
| Ni | bis 8 Massen%, vorzugsweise 3 bis 7 Massen%, |
| Fe | max. 5 Massen%, vorzugsweise max. 2 Massen%, |
| Mn | max. 2 Massen%, |
herstellungsbedingten Verunreinigungen sowie aus einem Rest an Massen% Cu besteht.

15. Verwendung nach Anspruch 14, **dadurch gekennzeichnet, dass** die Aluminiumbronze aus
| | |
|---|---|
| Al | 11,5 Massen%, |
| Ni | 4,8 Massen%, |
| Fe | 2 Massen%, |
| Mn | 1 Massen%, |
herstellungsbedingten Verunreinigungen sowie aus einem Rest an Massen% Cu besteht.
